Europäisches Patentamt

European Patent Office

Office européen des brevets

(11) Publication number: **0 464 742 A2**

# EUROPEAN PATENT APPLICATION

(21) Application number: **91110869.4**

(22) Date of filing: **01.07.91**

(51) Int. Cl.⁵: **G09G 5/08**, G05B 19/405, G06F 3/033

(30) Priority: **02.07.90 US 548654**

(43) Date of publication of application:
**08.01.92 Bulletin 92/02**

(84) Designated Contracting States:
**DE FR GB**

(71) Applicant: **XEROX CORPORATION**
**Xerox Square - 020**
**Rochester New York 14644(US)**

(72) Inventor: **Denber, Michel J.**
**29 Currewood Circle**
**Rochester, New York 14618(US)**

(74) Representative: **Stockmair, Wilfried, Dr. Ing. et al**
**Patentanwälte Grünecker, Kinkeldey Stockmair & Partner Maximilianstrasse 58 W-8000 München 22(DE)**

(54) Graphics display system with improved dynamic menu selection.

(57) In a graphic display system, display control software is modified to impart motion to a pop-up menu to attract the attention of the user. The menu becomes animated when a control and comparison circuit confirms that a mouse driven cursor on the screen is moving away from the pop-up menu indicating that the operator is unaware of the menu's presence. The menu moves or "tags-along" after the cursor until the user takes notice and makes the appropriate selection.

FIG. 1

## BACKGROUND AND MATERIAL DISCLOSURE STATEMENT

This invention relates to computer graphics display systems and, more specifically, to improved used interaction when using a mouse-driven, e.g., joystick, trackball, graphics tablet, etc., or similar type cursor, to make selections from a dynamic pop-up menu.

The evolution of computer technology has resulted in the creation of a highly sophisticated form of visual interface between the user and the computer system. Graphics information is processed by the computer in the form of bitmaps which are graphical representations of the patterns of information in memory to be presented on a video or CRT display screen. User input to the display screen is afforded by a keyboard and a cursor control device such as a mouse. A user interface on the display screen includes metaphoric symbols with which the user can interact by using the input means to selectively change the focus of the input means to a designated symbol visually pointed to via the mouse. Thereafter, the designated symbols can be manipulated or an interaction can be accomplished with data input/output relative to the designated symbol.

The need for facilitating the operation of the computer system has resulted in a "user friendly" system incorporating so called "menu-driven" programs wherein the various operational choices made available by the program are displayed for the user to select from. The user can then select the desired operation by moving the mouse-driven cursor to the desired menu frame. The menus may take two forms; a fixed, or a dynamic-type menu. A fixed menu is placed in some location on the screen and remains at that location throughout the application being run. A dynamic menu can be a pull-down menu or a pop-up menu. Either menu is activated in response to a request from the user (such as using the mouse to select the menu title). A dynamic menu is drawn on the screen and remains visible only until the user makes his or her choice. Once the choice is made, the menu is erased. Dynamic menus may also be initiated by the program, when it reaches a state where it needs more information from the user. The advantage of dynamic menus is that they use less valuable screen space than fixed menus, since they only appear when needed. This also results in a less-cluttered screen presentation. It is also good user interface design practice to only present to the user the information needed in the current context. For example, a menu with the choices "Yes/No" should only appear when the program needs to ask a yes-no question. Pop-up menus have the advantage that they may be placed anywhere on the screen, typically at the current cursor location. This minimizes the amount of mouse travel required by the user to access the menu selections.

Unfortunately, there is a problem with pop-up menus which has been encountered in practice. Although a pop-up menu which appears at the current cursor location should be noticed by the user, since the cursor position is normally the focus of attention on the screen, it sometimes happens that the user is watching another spot on the screen and starts moving the mouse there, or else is just randomly moving the mouse around at the exact moment that the computer brings up a pop-up menu. In this case, it is possible for the menu to go unnoticed by the user, especially if the menu is small (as in a menu with only the choices "Yes/No") or it is positioned on a cluttered screen. If the user does not realize that the computer is waiting for a response, considerable confusion and possible errors can result. These problems have been observed with "naive" users (non-programmers unfamiliar with the applications they are using, or the use of window and menu based systems in general), but can also affect experienced users. This problem, it is believed, has not been directly addressed in the prior art. According to the present invention, programming which controls the bitmap storage and transfer circuitry is modified to recognize a situation where a pop-up menu is activated and the cursor is moved away from the menu (indicating the user has not noticed the appearance of the menu). A graphics animation routine is enabled at this point which causes the menu to move in a tracking path following the cursor, thereby attracting the attention of the user, and eliminating the need to move the cursor back to the original menu location. No publications are known to the applicant disclosing or suggesting a display menu animated to follow the track of the cursor on a display screen. The following patents cited as background art are U.S. Patent No. 4,720,703 to Schnarel, Jr. et al. disclosing a display method and apparatus employing cursor panning wherein a window is expanded as a cursor is moved. The window can appear to move along with the cursor or mouse. See Col. 4, lines 19-54. See in U.S. Patent 4,837,563 which discloses a graphic display system including dynamic means circuitry.

More particularly the invention relates to a data processor which includes a graphic display screen having a user interface on said screen which includes metaphoric symbols including at least a dynamic pop-up menu symbol input mouse means connected through said processor to said screen, said mouse adapted to move a cursor on the display screen in response to the motion of the mouse, the improvement wherein said processor includes control means adapted to continuously compare the coordinates of said pop-up menu and said cursor, and generate an output signal when the initial distance 'D' between said registration coordinate positioning increases indicating that the cursor is moving away from the menu, and further including means actuable in response to said output input to move said pop-up menu in the direction of cursor movement whereby the user is alerted that a selection must be made at some pop-up menu.

## BRIEF DESCRIPTION OF THE DRAWINGS

Figure 1 is a partial functional block diagram showing the major hardware and software circuits used with the graphics display of the present invention.

Figure 2 is a flow diagram for the pop-up menu mouse tracking routine.

## DESCRIPTION OF THE INVENTION

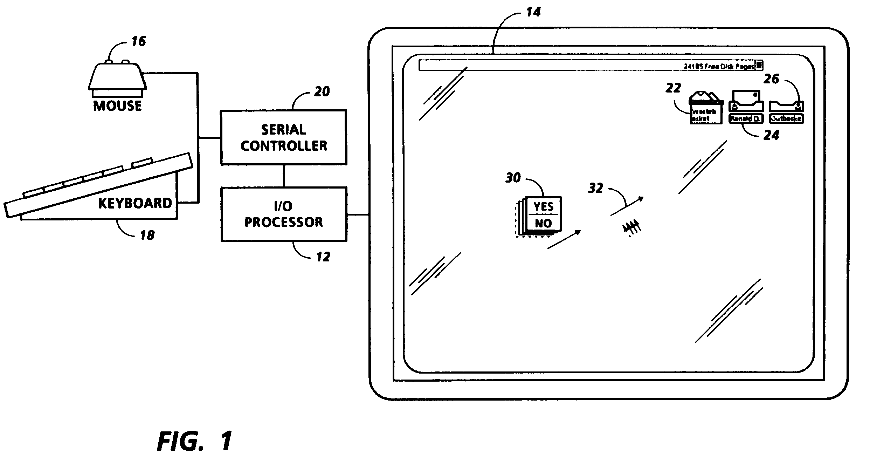

Figure 1 illustrates in schematic block diagram form the main software and hardware circuits utilized in the invention. A general purpose control processor includes an input/output processor 12 and a display screen 14. User interface is generated via mouse 16 or keyboard 18 via serial controller 20.

The present invention can be implemented on any computer system with a bit mapped graphic display. Examples of suitable systems are the Xerox 8010 (Star), Apple Macintosh, Commodore Amiga, etc.. The following description utilizes a a graphic display of a type disclosed in U.S. Patent 4,298,957 whose contents are hereby incorporated by reference. As shown in Figure 1, of the present application, display screen 14 resembles the top of an office desk. Objects 22, 24, 26 are representative of the common abstractions and comprise pictorial representations of real office objects, such as a waste basket, in-basket and out-basket, respectively. As described in the patent, a great variety of other user symbols may be used including fixed menus and transient "pop-up" menus, each menu listing specific commands and sub-commands which are selected by moving the mouse-controlled cursor to a desired selection. Figure 1 shows a pop-up menu 30 which differs from the prior art menus in that it is adapted to move or tag along after the cursor under operational conditions described below. For ease of description pop-up menu 30 will hereinafter referred as a "sticky" menu.

As is known in the art, computer-generated graphic images are produced by illuminating selected picture elements comprising a display screen. The array of picture elements in the display corresponds to the memory locations in an image memory located in the processor 12. The image memory is called the bitmap memory and the corresponding display is termed a bitmapped display. It is known in the art to move blocks of illuminated picture elements (pixels) from one place on the bitmap to another placed by appropriate bit manipulation. The present invention modifies this place-to-place movement by animating the movement so as to provide the appearance of a continuous motion suggested by the blurred image of the menu 30 in Figure 1.

It is assumed that at some point during operation sticky menu 30 is visually produced. A simple "yes-no" selection is required to be made by the user. If the user notices menu 30 immediately, he or she can use it just like a regular pop-up menu, selecting the desired choice using the mouse. However, if the user does not notice the menu's appearance and starts to move cursor 32 away from the spot on the screen where the menu popped up, the menu begins to "tag along", like a dog on a leash, following the cursor around on the screen. The menu in effect "sticks" to the cursor. It cannot be lost or ignored. Even if the user is not watching the cursor while moving the mouse. the effect of having the entire menu in motion, tracking the cursor, is sufficiently different from the normal cursor appearance to attract the user's attention. When the user stops moving the mouse, the menu also stops, and the choice can be made as usual. As long as the cursor remains within a programmer-selectable distance from the menu (the length of the "leash"), the menu remains stationary. By using a simple animation technique, the menu can be made to move smoothly around the screen as the cursor moves about.

Mouse movement utilizing controlled software on conventional workstations such as a Xerox 8010 enables the following functional movement of this menu over a surface causing the display cursor to move on screen 30 in the same direction as the mouse. The location of the cursor is defined by X and Y positional coordinates which designate the column in the line in the display. These X-Y coordinates are stored in a scan code in bip map memory located within processor 12. Whenever the user moves the mouse, new X-Y coordinates are computed and made available to the workstation software. This function is performed automatically using a combination of hardware and software. According to the present invention, to enable the tag along function, the mouse control software is modified as follows: When the pop-up menu is displayed, the coordinates of the instant location of the cursor are compared to the coordinates of the pop-up menu. An drithmetic subtraction operation is performed on the two sets of coordinates to derive the binary value representing an initial spatial distance D separating the two sets of coordinates. When a scan code is received indicating movement of the mouse, new values of the X & Y positions of the menu are loaded into memory.

The next movement resulting in incremental subtraction operation to be performed on the cursor changes the value of D. The new value D' is compared to the initial value D in a comparator circuit. If D' is less than D, the user has seen the menu and is moving cursor 32 towards it, and the menu remains stationary until the yes/no selection is made. If D' is greater than D plus some value K, K being a predetermined distance which the user may move the cursor away from the menu before noticing it, the sticky menu coordinates are incrementally changed and, under software control, pop-up menu 30 begins to move in the animated sequence suggested by Figure 1 along the same track or direction taken by the cursor 32 ,e.g., in a path parallel to that of the cursor. The menu continues to track the cursor until the user notices this movement and uses the cursor to point at the desired Yes/No menu item.

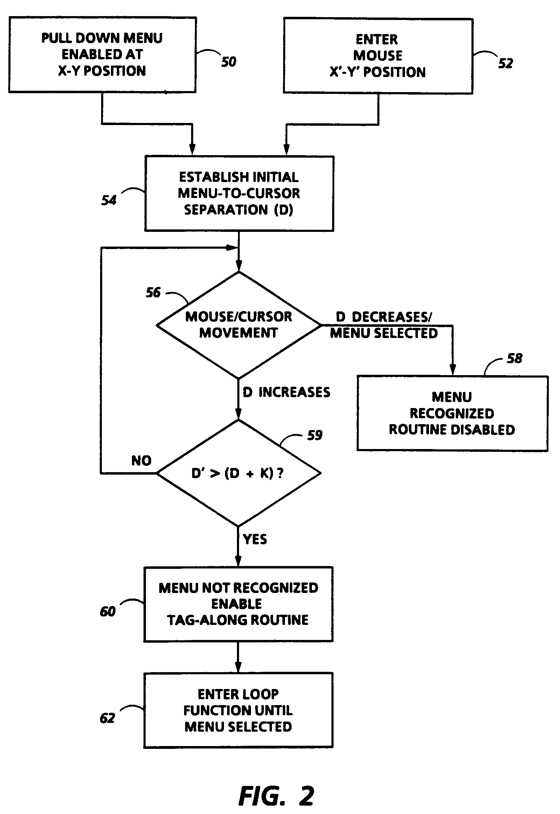

Referring now to Figure 2, a flow chart describes the overall process of this tag-along routine. The routine is initiated when a pull-down menu is activated (block 50). The X-Y screen coordinates of the mouse and of the cursor (X', Y') block 52 are compared in block 54 and the value D, representing the initial spatial separation distance, is entered into memory. At this point the operator will either recognize that the menu has appeared on the screen or will not have noticed its appearance. Subsequent mouse/cursor motion is sensed in diamond 56. If the motion is in a direction where D decreases, (D' is less than D) menu selection follows and the routine is inactivated (block 58). If motion is in the direction where D begins to increase beyond the nominal value (K), (block 59), e.g., D' becomes greater than D + K), the menu has not been recognized, and the tag-along routine is fully enabled (block 60). The menu icon cursor 32 physically moves along the path towards the mouse at the rate at which the cursor is moving. This tag-along movement is maintained until the operator notices the irregular icon behavior and moves the cursor to make the required menu selection.

One example of software to carry out the tracking 2 routine is written in Interlisp-D and is as follows:

```
(PROG      ((ITEMS (QUOTE ((Yes T) (No NIL)))) FW FM OLDX OLDY)
           (AND QUERY (printout (OR PROMPTWIN PROMPTWINDOW)
           QUERY))
           (AND CHOICES (SETQ ITEMS (LIST (LIST (CAR CHOICES) T) (LIST
           (CADR CHOICES) NIL))))
           (SETQ FW
                    (ADDMENU
                    (SETQ FM
                            (create MENU ITEMS  ← ITEMS MENUOUTLINESIZE
                            ← 2
                            WHENSELECTEDFN ←  (FUNCTION (LAMBDA (ITEM
                            MNAME KEY) CADR ITEM)))))))
(GETMOUSESTATE)
(SETQ OLDX LASTMOUSEX)
(SETQ OLDY LASTMOUSEY)
(until (MOUSESTATE LEFT)
  do  ;; Loop until a selection is made:
           (GETMOUSESTATE)    ;; check distance:
           (if (OR (IGREATERP  (ABS  (IDIFFERENCE LASTMOUSEEX OLDX))
(WINDOWPROP FW (QUOTE WIDTH))) (IGREATERP
           (ABS (IDIFFERENCE LASTMOUSEY OLDY))  (WINDOWPROP FW
           (QUOTE HEIGHT)))) then
                    ;; Tag along:
           (MOVEW FW LASTMOUSEX LASTMOUSEY)
           (SETQ OLDX LASTMOUSEX)
           (SETQ  OLDY LASTMOUSEY)))
(CLOSEW  FW)
(RETURN (MENU FM (CONS OLDX OLDY)))))
```

While the invention has been described with reference to the structure disclosed, it will be appreciated that numerous changes and modifications are likely to occur to those skilled in the art, and it is intended to cover all changes and modifications which fall within the true spirit and scope of the invention.

**Claims**

1. In a data processor which includes a graphic display screen having a user interface on said screen, said interface including metaphoric symbols including at least a dynamic pop-up menu symbol, input mouse means connected through said processor to said screen, said mouse adapted to move a cursor on the display screen in response to the motion of the mouse, the improvement wherein said processor includes control means adapted to continuously compare the coordinates of said pop-up menu and said cursor, and generate an output signal when an initial distance D between said registration coordinate positions increases, indicating that the cursor is moving away from the menu, and further including means actuable in response to said output signal to move said pop-up menu in the direction of cursor movement whereby the user is alerted that a selection must be made at said pop-up menu.

2. The data processor of Clam 1 wherein said comparison means output signal is generated when the initial distance D increases by a distance greater than K, K being some value less than D.

3. The data processor of Claim 1 wherein said pop-up menu is moved along a path parallel to the cursor.

4. In a graphic display system, a display screen, a visible display controller, an input mouse cooperable with the display controller for moving a cursor on a display screen in response to the motion of the mouse, wherein said display displays metaphoric objects including at least a dynamic pop-up menu, and wherein said controller includes means adapted to recognize the simultaneous coordinate positions of said cursor and said pop-up menu, and means to impart animated motion to said pop-up menu when said cursor is moved away from said menu.

5. A method of providing animated motion to a metaphoric object on a graphics display screen comprising controlling the position of a cursor on a display screen by means of a mouse interfacing with said screen through a display controller, determining the initial X and Y coordinate position of said object relative to the X and Y coordinate positions of the mouse to determine the distance changes in the cursor position and comparing whether an initial distance D separating said object and mouse initial coordinate is increasing or decreasing and imparting motion to said object when an increase in said distance D is detected.

6. The method of Claim 5 whereby said motion is in the same direction as the cursor motion.

FIG. 1

EP 0 464 742 A2

```
┌─────────────────────┐              ┌─────────────────────┐
│   PULL DOWN MENU     │              │       ENTER         │
│    ENABLED AT        │  50          │       MOUSE         │  52
│    X-Y POSITION      │              │    X'-Y' POSITION   │
└─────────────────────┘              └─────────────────────┘
```

**ESTABLISH INITIAL MENU-TO-CURSOR SEPARATION (D)** — 54

56 — MOUSE/CURSOR MOVEMENT

D DECREASES/ MENU SELECTED

58 — MENU RECOGNIZED ROUTINE DISABLED

D INCREASES

59 — D' > (D + K) ?

NO

YES

60 — MENU NOT RECOGNIZED ENABLE TAG-ALONG ROUTINE

62 — ENTER LOOP FUNCTION UNTIL MENU SELECTED

## FIG. 2